Europäisches Patentamt

European Patent Office

Office européen des brevets

(19)

(11) Numéro de publication : **0 312 421 B1**

# (12) FASCICULE DE BREVET EUROPEEN

(45) Date de publication du fascicule du brevet :
**15.01.92 Bulletin 92/03**

(51) Int. Cl.⁵ : **G21C 13/02,** B23K 15/00,
F16L 41/08

(21) Numéro de dépôt : **88402468.8**

(22) Date de dépôt : **29.09.88**

(54) **Procédé de fixation par soudage d'une tubulure sur un élément de paroi de forte épaisseur telle qu'une virole porte-tubulures d'une cuve de réacteur nucléaire.**

(30) Priorité : **16.10.87 FR 8714322**

(43) Date de publication de la demande :
**19.04.89 Bulletin 89/16**

(45) Mention de la délivrance du brevet :
**15.01.92 Bulletin 92/03**

(84) Etats contractants désignés :
**AT BE CH DE ES GB IT LI NL SE**

(56) Documents cités :
**DE-A- 2 537 115
DE-A- 3 437 621
FR-A- 2 229 010**

(56) Documents cités :
**NUCLEAR ENGINEERING INTERNATIONAL,
vol. 22, no. 262, septembre 1977, pages 74,75;
A. MARTIN et al.: "A novel design for PWR
pressure vessels"**

(73) Titulaire : **FRAMATOME
Tour Fiat 1, Place de la Coupole
F-92400 Courbevoie (FR)**

(72) Inventeur : **Vignes Alain
4, place Violet
F-75015 Paris (FR)**

(74) Mandataire : **Bouget, Lucien et al
Cabinet Lavoix 2, Place d'Estienne d'Orves
F-75441 Paris Cédex 09 (FR)**

**Description**

L'invention concerne un procédé de fixation par soudage d'une tubulure sur un élément de paroi de forte épaisseur et en particulier mais non exclusivement un procédé de fixation de tubulures sur une virole porte-tubulures d'une cuve de réacteur nucléaire à eau légère.

Les réacteurs nucléaires à eau légère et en particulier les réacteurs nucléaires à eau sous pression comportent une cuve de forme générale cylindrique fermée par des fonds bombés. La partie cylindrique est constituée par des viroles forgées qui sont soudées bout à bout au moment de l'assemblage de la cuve. L'une de ces viroles, appelée virole porte-tubulures, comporte des ouvertures traversant sa paroi au niveau desquelles on réalise la fixation de tubulures destinées à être raccordées aux canalisations constituant les branches chaudes et les branches froides des boucles du circuit primaire.

Le procédé le plus utilisé jusqu'ici pour réaliser la fixation des tubulures sur la virole porte-tubulures consiste à prévoir des ouvertures traversant la virole d'un diamètre supérieur au diamètre extérieur de la tubulure qui est engagée dans l'ouverture sur toute l'épaisseur de la paroi de la virole. Des parties usinées de manière correspondante sur la tubulure et dans l'ouverture de la virole permettent de ménager un ou plusieurs chanfreins de soudage qui sont ensuite remplis de métal d'apport depuis l'extérieur et/ou l'intérieur de la virole. Cette opération est réalisée en utilisant le procédé de soudage automatique à l'arc submergé.

Dans le cas de réacteurs nucléaires dont la cuve présente un diamètre de l'ordre de 4,50 mètres, l'épaisseur de la virole porte-tubulures est un peu inférieure à 300 mm, cette épaisseur étant sensiblement constante dans toutes les parties de la virole.

On a également proposé un procédé différent de fixation des tubulures d'une virole porte-tubulures. Ce procédé consiste à prévoir dans la virole porte-tubulures des ouvertures dont le diamètre correspond sensiblement au diamètre intérieur de la tubulure qui est soudée sur toute son épaisseur dans le prolongement de l'ouverture, du côté extérieur de la paroi de la virole.

Ce mode de fixation de la tubulure où celle-ci est rapportée, c'est-à-dire "posée" sur la surface extérieure de la virole est désigné par le terme anglais "set-on", par opposition au mode de fixation décrit plus haut où la tubulure pénètre dans l'ouverture traversant la virole, ce mode de fixation étant désigné par le terme anglais "set-in".

La configuration "set-on" résultant du second mode de fixation présente théoriquement des avantages sur la configuration "set-in", puisqu'un défaut de la soudure entraînant une rupture constituerait un type d'accident prévu dans les dossiers de sûreté des centrales nucléaires, cet accident étant équivalent à la rupture d'une branche du circuit primaire se traduisant par une perte d'agent de refroidissement à très grand débit.

Dans le cas de la configuration "set-in", un défaut de la soudure d'une tubulure entraînant une rupture constitue un accident équivalent à une rupture de cuve.

Cependant, la conception "set-on" nécessite l'utilisation d'une virole porte-tubulures d'une épaisseur accrue et la présence de parties en saillie vers l'extérieur sur cette virole sur lesquelles sont rapportées les tubulures. En effet, il n'est pas possible de réaliser le soudage automatique à l'arc submergé de la tubulure dans une zone affleurant la surface extérieure de la virole, à cause de l'encombrement de la tête de soudage.

Il est donc nécessaire, dans le cas d'une cuve de réacteur d'un diamètre voisin de 4,50 m, de prévoir une virole porte-tubulures dont l'épaisseur est de l'ordre de 400 mm dans sa partie courante et qui peut atteindre 450 mm au niveau des saillies sur lesquelles sont rapportées les tubulures. Le forgeage de telles viroles nécessite l'utilisation de lingots de départ d'une masse très importante de l'ordre de 350 tonnes.

D'autre part, la réalisation du soudage automatique à l'arc submergé des tubulures est une opération délicate qui nécessite de nombreux contrôles.

De manière plus générale, dans le cas de réacteurs ou de récipients d'un type quelconque comportant une paroi de forte épaisseur, par exemple supérieure à 100 mm, on ne connaissait pas de procédé de fixation de tubulures par soudage, d'une mise en oeuvre simple et d'une durée d'exécution réduite qui permette d'assurer une très bonne qualité de la soudure.

Le but de l'invention est donc de proposer un procédé de fixation par soudage d'une tubulure sur un élément de paroi de forte épaisseur de l'ordre de 100 à 350 mm comportant au moins une ouverture traversante dont le diamètre est sensiblement égal au diamètre intérieur de la tubulure, la tubulure étant soudée sur toute son épaisseur dans le prolongement de l'ouverture sur un des côtés de la paroi, ce procédé permettant de simplifier la réalisation de la soudure et d'en diminuer le temps d'exécution tout en permettant l'obtention d'une soudure de très bonne qualité et l'utilisation d'une paroi d'épaisseur limitée.

Dans ce but, on réalise sur une partie d'extrémité de la tubulure une surface de raccordement de forme tronconique dont l'axe est confondu avec l'axe de la tubulure ayant un demi-angle au sommet compris entre 30 et 60° et une section de dimension transversale décroissante vers l'extrémité de la tubulure, on réalise sur l'élément de paroi, sur une partie seulement de son épaisseur, au niveau de l'ouverture et coaxialement à cette ouverture, une surface de raccordement de forme tronconique correspondant à la forme de la surface de raccordement de la tubulure débouchant sur le côté extérieur de la paroi et évasée en direction de ce côté de la paroi,

— on place les surfaces de raccordement de la tubulure et de la paroi en coïncidence,

— et on soude par faisceau d'électrons en un seul passage et sans métal d'apport la tubulure et l'élément de paroi suivant leurs surfaces de raccordement, depuis le côté extérieur de la paroi.

Afin de bien faire comprendre l'invention, on va maintenant décrire, à titre d'exemple non limitatif, en se référant aux figures jointes en annexe, un mode de réalisation du procédé suivant l'invention dans le cas d'une virole porte-tubulures d'une cuve de réacteur nucléaire à eau sous pression.

La figure 1 est une demi-vue en coupe transversale au niveau des tubulures, d'une virole porte-tubulures ayant une configuration "set-in".

La figure 2 est une vue en coupe analogue à la vue de la figure 1 d'une virole porte-tubulures ayant une configuration "set-on" suivant l'art antérieur.

La figure 3 est une demi-vue en coupe analogue aux figures 1 et 2 d'une virole porte-tubulures ayant une configuration "set-on" et réalisée suivant le procédé de l'invention.

Les figures 4A et 4B sont des vues en coupe axiale telle que 4-4 de la figure 1, d'une virole porte-tubulures ayant une configuration "set-in", avant et après soudage d'une tubulure.

Les figures 5A et 5B sont des vues en coupe axiale telle que la coupe 5-5 de la figure 2 d'une virole porte-tubulures ayant une configuration "set-on" suivant l'art antérieur, avant et après soudage d'une tubulure.

Les figures 6A et 6B sont des vues en coupe axiale telle que la vue suivant 6-6 de la figure 3, d'une virole porte-tubulure réalisée suivant le procédé de l'invention, avant et après soudage d'une tubulure.

La figure 7 est une vue à plus grande échelle en coupe axiale montrant une tubulure fixée suivant le procédé de l'invention sur une virole et revêtue intérieurement d'acier inoxydable.

La figure 8 est une vue en coupe verticale d'une installation de soudage par faisceau électronique permettant la mise en oeuvre du procédé de fixation suivant l'invention.

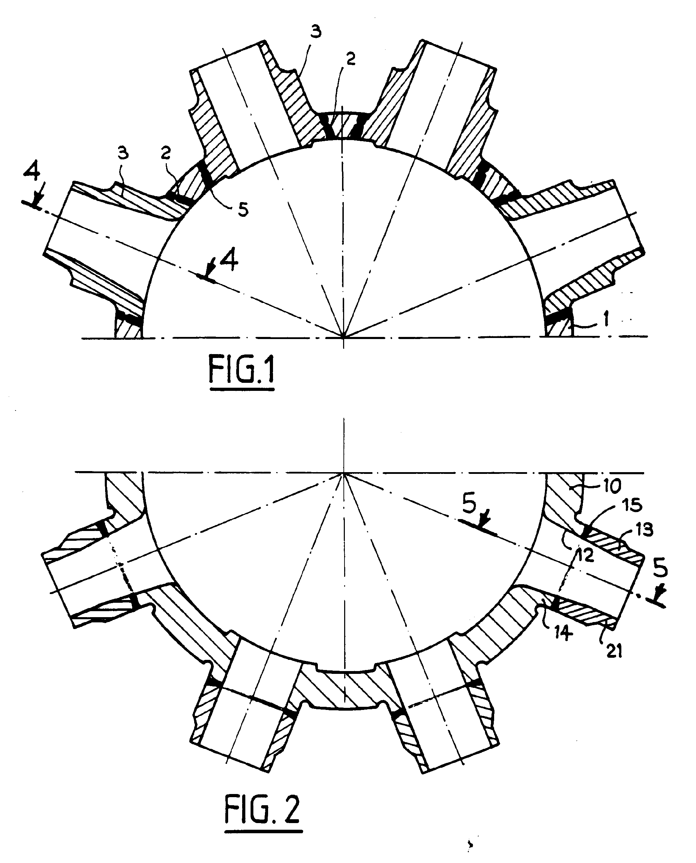

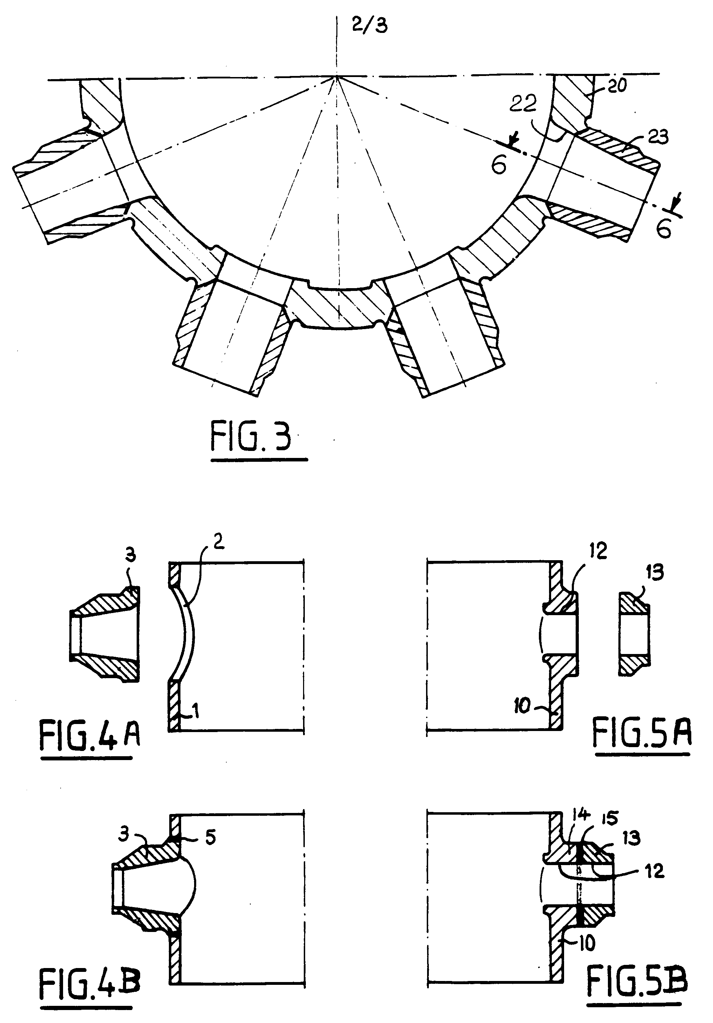

Sur les figures 1, 4A et 4B, on voit une virole de cuve 1 sur laquelle ont été usinées des ouvertures 2 dont le diamètre est supérieur au diamètre extérieur des tubulures 3 qui doivent être fixées sur la virole 1.

L'ensemble de la virole porte-tubulure qui est destiné à un réacteur nucléaire à quatre boucles comporte huit ouvertures destinées à recevoir chacune une tubulure 3. Les tubulures 3 sont de deux types suivant qu'elles sont destinées à être raccordées à une branche chaude ou à une branche froide d'une boucle du circuit primaire. Les tubulures des deux types se distinguent par le fait que leur alésage est soit de forme cylindrique soit de forme sensiblement tronconique.

La tubulure 3 et l'ouverture 2 sont usinées de façon à constituer des rebords annulaires dans des positions correspondantes permettant de délimiter deux chanfreins de soudage, lorsque la tubulure 3 est mise en position à l'intérieur de l'ouverture 2. L'un des chanfreins de soudage débouche vers l'extérieur de la virole porte-tubulures et l'autre chanfrein de soudage vers l'intérieur. L'ensemble des deux chanfreins 5 est rempli de métal d'apport par soudage automatique à l'arc submergé.

Il est visible sur les figures 1 et 4B que le métal d'apport de la soudure 5 constitue une partie de la barrière séparant l'eau sous pression à l'intérieur de la cuve, du milieu extérieur.

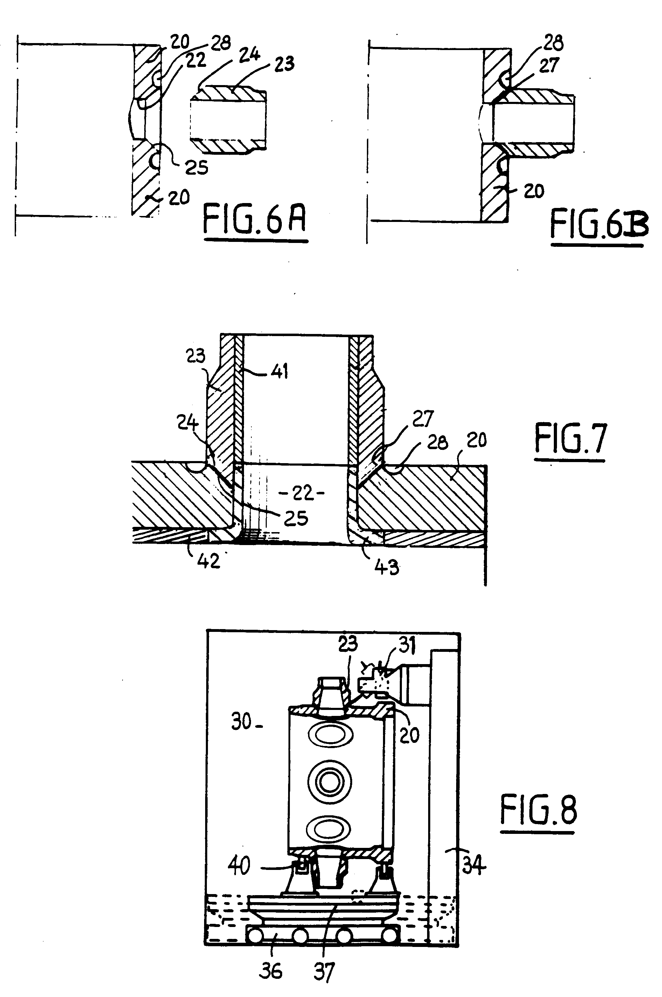

Sur les figures 2, 5A et 5B, on a représenté une seconde configuration d'une virole porte-tubulures d'un réacteur nucléaire à eau sous pression et son mode de réalisation. La virole porte-tubulures 10 comporte des ouvertures traversantes 12 dont le diamètre correspond sensiblement au diamètre intérieur de la tubulure 13. Les tubulures 13 sont rapportées sur la surface extérieure de la virole porte-tubulures 10, de façon que leur alésage intérieur se trouve dans le prolongement exact de l'ouverture 12 traversant la virole 10. Les tubulures 13 sont fixées sur la paroi extérieure de la virole 10, au niveau de parties annulaires en saillie 14 entourant chacune une ouverture 12.

Chacune des tubulures 13 est fixée par soudage sur toute son épaisseur sur la partie en saillie 14 correspondante. Le métal d'apport 15 peut être déposé par soudage automatique à l'arc submergé, dans un seul chanfrein, depuis l'extérieur de la tubulure 13. Des rebords correspondants sur la tubulure et la partie en saillie 14 permettent de délimiter et de fermer le chanfrein vers l'intérieur.

Comme il est visible sur les figures 2 et 5B, le métal d'apport de soudage 15 constitue dans cette configuration "set-on" une zone de liaison entre la cuve et la branche correspondante du circuit primaire. Une rupture au niveau de la zone de jonction 15 est donc équivalente à une rupture d'une branche du circuit primaire et non à une rupture de cuve.

Aussi bien dans le cas de la configuration "set-in" représentée sur les figures 1, 4A et 4B que dans le cas de la configuration "set-on" représentée sur les figures 2, 5A et 5B, l'opération de soudage pour constituer les joints soudés de métal d'apport 5 et 15 doit être effectuée avec le plus grande soin et surveillée en permanence, pour assurer une qualité parfaite du joint soudé. De plus, les rebords délimitant les chanfreins doivent être éliminés par usinage après remplissage partiel du ou des chanfreins.

Toutes ces opérations qui doivent être effectuées depuis l'extérieur ou l'intérieur de la virole porte-tubulures sont extrêmement longues et délicates.

Dans le cas d'une virole porte-tubulures dont le diamètre est voisin de 4,50 m, l'épaisseur de la virole porte-tubulures 1, dans le cas de la configuration, "set-in" est un peu inférieure à 300 mm. L'épaisseur des tubulures est de 300 mm.

Dans le cas de la configuration "set-on" représentée sur les figures 2, 5A et 5B, pour un même diamètre de cuve voisin de 4,50 m, l'épaisseur de la partie courante de la virole 10 est voisine de 400 mm et l'épaisseur de la virole 10, autour des ouvertures 12, de l'ordre de 450 mm, l'épaisseur de la virole 10 étant accrue par la présence dans ces zones des parties en saillie 14. L'épaisseur des tubulures, suivant laquelle est effectué le joint de soudure 15, est de l'ordre de 150 mm.

Il apparaît donc que la configuration "set-on" représentée sur les figures 2, 5A et 5B nécessite l'utilisation d'une virole 10 d'une épaisseur très largement accrue par rapport au cas de la configuration "set-in".

La présence des parties en saillie 14 est nécessaire pour pouvoir réaliser le soudage dans une zone suffisamment éloignée de la surface extérieure de la virole 10 pour permettre le passage de la tête de soudage.

Sur les figures 3 et 6B, on a représenté une virole porte-tubulures 20 sur laquelle on a fixé des tubulures 23 par le procédé suivant l'invention. La tubulure 20 comporte huit ouvertures traversantes 22 dont le diamètre intérieur correspond au diamètre intérieur des tubulures 23.

Comme il est visible sur la figure 6A représentant la virole porte-tubulures 20 et la tubulure 23 avant leur assemblage, la partie d'extrémité de la tubulure 23 destinée à venir en contact d'assemblage avec la virole 20 est usinée pour constituer une surface de raccordement de forme tronconique 24.

La virole 20 est usinée, suivant une partie de son épaisseur, au niveau de l'ouverture 22, pour constituer une surface de raccordement tronconique 25 dont la forme correspond parfaitement à la forme de la surface tronconique de raccordement 24 de la tubulure 23. La surface 24 a une section dont la dimension transversale est décroissante vers ladite extrémité de la tubulure et la surface 25 de l'ouverture 22 est évasée vers l'extérieur de la virole 20. Le demi-angle au sommet des surfaces tronconiques 24 et 25 est sensiblement égal à 45°. La surface 25 débouche par sa partie évasée sur la surface extérieure de la virole 20. On peut donc facilement réaliser l'engagement de l'extrémité de raccordement de la tubulure 23 à l'intérieur de la partie tronconique évasée 25 de l'ouverture 22. Les deux surfaces tronconiques correspondantes 24 et 25 ont pour axes, l'axe de la tubulure et l'axe de l'ouverture 22 respectivement. Ces deux axes coïncident, lorsque les tubulures sont mises en place comme représenté sur les figures 3 et 6B.

Comme il est visible sur les figures 3 et 7, la virole porte-tubulures 20 ne comporte pas de surépaisseur au niveau de l'ouverture traversante 22 sur laquelle on vient rapporter la tubulure 23.

La virole 20 comporte uniquement une gorge torique 28 au niveau de laquelle débouche la zone de raccordement 27 entre la tubulure 23 et l'ouverture évasée de la virole 20.

La gorge 28 permet de réaliser un dégagement assurant un meilleur accès à l'extrémité extérieure de la zone de jonction entre la tubulure 23 et l'ouverture évasée de la virole 20.

Comme il est visible sur la figure 8, le soudage des tubulures 23 sur la virole 20 est réalisé à l'intérieur d'une enceinte 30 de grandes dimensions dont l'atmosphère peut être évacuée par un système de pompage susceptible d'établir un vide poussé de l'ordre de $1.33 \cdot 10^{-3}$ Pascal ($10^{-5}$ mm de mercure).

L'enceinte 30 renferme un canon à électrons 31 monté mobile dans la direction verticale sur des colonnes 34 et qui peut être orienté vers le bas, dans une direction faisant un angle sensiblement égal à 45° avec la verticale. La virole porte-tubulures 20 repose sur un plateau 37 lui-même monté rotatif autour d'un axe vertical sur un chariot 36 qui peut être déplacé en translation à l'intérieur de l'enceinte 30. La virole 20 repose sur le plateau 37 par l'intermédiaire de galets à axe horizontal d'un vireur 40.

Pendant le soudage par faisceau d'électrons de la tubulure 23 sur la virole 20, le canon à électrons 31 est fixé en position verticale et en inclinaison, le chariot 36 en position fixe dans l'enceinte et la virole 20 est en position fixe sur le vireur 40. La position de la virole 20 et de la tubulure 23 est telle que le faisceau du canon à électrons 31 soit parfaitement dirigé suivant une génératrice de la surface de jonction tronconique entre la tubulure et la virole. L'axe de la tubulure 23 dont on réalise le soudage est confondu avec l'axe de rotation du plateau 37. Le plateau 37 est mis en rotation à vitesse lente, de façon que le faisceau d'électrons parcoure l'ensemble de la zone de jonction tronconique entre la tubulure et la virole, à une vitesse de 10 à 40 cm/mn.

On utilise un canon à électrons d'une puissance de 200 KW susceptible de réaliser le soudage de la tubulure sur la virole en un seul passage sans métal d'apport.

La virole porte-tubulures 20 et les tubulures 23 ont été réalisées par forgeage d'un acier renfermant principalement 2 à 2,5% de chrome, 0,9 à 1,10% de manganèse et une teneur en carbone au plus égale à 0,15%. Les teneurs en chrome et en molybdène visées pour cet acier sont de 2,25% et 1% respectivement.

Un tel acier connu et utilisé pour la fabrication de composants destinés à l'industrie pétrochimique présente des propriétés de trempabilité parfaitement adaptées au soudage par faisceau d'électrons, pour des pièces d'une épaisseur supérieure à 100 mm.

Dans le cas du soudage d'une tubulure 23, l'épaisseur du joint soudé est comprise entre 150 et 170 mm ce qui reste parfaitement compatible avec les performances de l'installation de soudage par faisceau d'électrons dont les possibilités s'étendent jusqu'à des épaisseurs de l'ordre de 300 mm.

La qualité du joint soudé s'est avérée parfaitement satisfaisante.

Pour effectuer le soudage successif des huit tubulures sur la virole porte-tubulures 20, on oriente cette virole autour de son axe, grâce au vireur 40, de façon à amener la tubulure à souder en position haute avec son axe vertical.

La présence de la gorge torique 28 sur la virole 20 autour de la partie évasée débouchante de l'ouverture 22 permet un meilleur accès du faisceau d'électrons à la zone de jonction.

Dans le cas d'une cuve d'un réacteur à eau sous pression dont la virole porte-tubulures 20 a un diamètre voisin de 4,50 m, on limite l'épaisseur de cette virole porte-tubulures à une valeur inférieure à 350 mm, en utilisant le procédé de jonction des tubulures suivant l'invention. Ce procédé permet en effet d'éviter la présence de parties en saillie vers l'extérieur de la virole 20 et donc de surépaisseurs locales au voisinage des ouvertures traversantes 22. Le faisceau d'électrons incliné à 45° peut en effet facilement atteindre la zone de jonction, le canon à électrons étant lui-même situé à une certaine distance de la tubulure comme représenté sur la figure 8.

Le procédé selon l'invention, permet de réaliser la fixation de tubulures suivant une disposition "set-on" sur une virole porte-tubulures dont l'épaisseur est sensiblement inférieure à celle requise pour les configurations "set-on" suivant l'art antérieur.

Sur la figure 7, on voit une tubulure 23 qui a été fixée sur une virole porte-tubulures 20 par le procédé suivant l'invention, avec réalisation d'un joint soudé 27 par faisceau d'électrons et sans métal d'apport.

L'alésage intérieur de la tubulure 23 est revêtu d'une couche d'acier inoxydable 41 interrompue au voisinage de l'extrémité de la tubulure qui a été réalisée à l'intérieur de la tubulure pendant sa fabrication et préalablement à son soudage sur la virole 20.

De même, la virole 20 est revêtue intérieurement par une couche d'acier inoxydable 42 qui est interrompue au voisinage des ouvertures 22.

Après soudage de la tubulure 23 sur la virole 20 par faisceau d'électrons formant une zone de jonction 27, le revêtement inoxydable à l'intérieur de la tubulure et de la virole porte-tubulures doit être complété par dépôt d'une couche d'acier inoxydable 43 joignant la couche 41 et la couche 42 et recouvrant la zone de jonction 27.

Les surfaces de raccordement des tubulure 23 et de la virole 20, respectivement 24 et 25, de forme tronconique peuvent être effectuées par usinage de chacune des tubulures 23 et de la virole 20 au niveau de ses ouvertures 22 correspondantes, juste avant leur assemblage. Les tubulures 23 peuvent comporter une extrémité préformée destinée à constituer la surface tronconique de raccordement 24.

Le procédé suivant l'invention a pour avantages principaux de permettre une fixation rapide et sans utilisation de métal d'apport des tubulures sur la virole porte-tubulures. L'épaisseur de cette virole peut être limitée aussi bien dans sa partie courante que dans sa partie de jonction avec les tubulures.

Dans tous les cas, le demi-angle au sommet des surfaces tronconiques devra être compris entre 30 et 60°, pour obtenir à la fois une accessibilité suffisante à la zone de jonction depuis l'extérieur de la tubulure et de la virole et une fixation satisfaisante de la tubulure.

Il est bien évident que l'invention ne se limite pas au mode de réalisation qui a été décrit.

C'est ainsi qu'on peut appliquer l'invention à des pièces différentes de viroles et de tubulures raccordées à ces viroles. L'invention peut être appliquée par exemple à la fixation de tubulures sur une calotte sphérique, de préférence au niveau d'une ouverture centrée sur l'axe de révolution de la calotte sphérique. De tels montages de tubulures sont fréquents dans le cas des réacteurs chimiques ou pétrochimiques.

On peut envisager l'utilisation d'aciers différents de celui qui a été décrit pour la réalisation de la virole et des tubulures. L'acier utilisé doit cependant présenter des caractéristiques de trempabilité suffisantes pour permettre d'obtenir un joint soudé de bonne qualité.

La tubulure et l'élément de paroi sur lequel est fixée cette tubulure devront dans tous les cas présenter une zone de recouvrement s'étendant sur une partie seulement de l'épaisseur de la paroi. Avantageusement, cette zone de recouvrement s'étendra au plus sur un tiers de l'épaisseur de la paroi. Dans le cas où la zone de recouvrement s'étend sur une partie substantielle ou sur la totalité de l'épaisseur de la paroi, on retrouve les inconvénients de la fixation suivant la configuration "set-in" des tubulures.

L'invention s'applique non seulement dans le domaine des réacteurs nucléaires mais encore dans le domaine des réacteurs chimiques ou pétrochimiques et des récipients sous pression en général.

**Revendications**

1. Procédé de fixation par soudage d'une tubulure (23) sur un élément de paroi (20) de forte épaisseur de l'ordre de 100 à 350 mm comportant au moins une ouverture (22) traversante dont le diamètre est sensiblement égal au diamètre intérieur de la tubulure (23), la tubulure (23) étant soudée sur toute son épaisseur, dans le prolongement de l'ouverture (22) sur un des côtés ou côté extérieur de la paroi (20), caractérisé par le fait qu'on réalise sur une partie d'extrémité de la tubulure (23) une surface de raccordement (24) de forme tronconique dont l'axe est confondu avec l'axe de la tubulure (23) ayant un demi-angle au sommet compris entre 30 et 60° et une section de dimension transversale décroissante vers ladite extrémité de la tubulure (23), qu'on réalise sur une partie seulement de l'épaisseur de l'élément de paroi (20), au niveau de l'ouverture (22) et coaxialement à cette ouverture, une surface de raccordement (25) de forme tronconique correspondant à la forme de la surface de raccordement (24) de la tubulure (23) débouchant sur le côté extérieur de la paroi (20) et évasée en direction de ce côté de la paroi (20),

— qu'on place les surfaces de raccordement de la tubulure (23) et de la paroi (20) en coïncidence,

— et qu'on soude par faisceau d'électrons en un seul passage et sans métal d'apport la tubulure (23) et l'élément de paroi (20) suivant leurs surfaces de raccordement (24, 25), depuis le côté extérieur de la paroi.

2. Procédé suivant la revendication 1, caractérisé par le fait que le demi-angle au sommet des surfaces de raccordement (24, 25) est sensiblement égal à 45°.

3. Procédé de fixation suivant l'une quelconque des revendications 1 et 2, caractérisé par le fait que l'élément de paroi (20) comporte, autour de l'ouverture (22), à l'endroit où débouche la partie évasée de la surface de raccordement (25), une gorge de forme torique (28).

4. Procédé de fixation suivant l'une quelconque des revendications 1 à 3, caractérisé par le fait que l'élément de paroi (20) et la tubulure (23) sont constituées par un acier contenant principalement 2 à 2,50% de chrome et 0,90 à 1,10% de molybdène ainsi qu'une teneur en carbone au plus égale à 0,15%.

5. Procédé de fixation suivant l'une quelconque des revendications 1 à 4, dans le cas où l'élément de paroi (20) est une virole porte-tubulures d'une cuve de réacteur nucléaire à eau sous pression, caractérisé par le fait que la virole porte-tubulures a un diamètre voisin de 4,50 m et une épaisseur inférieure à 350 mm.

**Patentansprüche**

1. Verfahren zur Befestigung durch Schweissen eines Rohres (23) an ein Wandelement (20) großer Dicke einer Größenordnung zwischen 100 bis 350 mm, mit mindestens einer Durchgangsöffnung (22), deren Durchmesser im wesentlichen gleich dem Innendurchmesser des Rohres (23) ist, wobei das Rohr (23) in der Verlängerung der Öffnung (22) von einer Seite oder der Außenseite des Wandelements (20) über seine ganze Dicke geschweißt ist, **dadurch gekennzeichnet**,

daß man einen Endbereich des Rohres (23) mit einer kegelstumpfförmigen Verbindungsoberfläche (24) versieht, deren Achse mit der Rohrachse zusammenfällt und die einen Halbwinkel zwischen 30° und 60° an der Kante aufweist, wobei der Endbereich im Schnitt eine gegen dieses Ende des Rohres (23) hin abnehmende Querabmessung aufweist,

daß man über nur einen Teil der Dicke des Wandelements (20) an der Öffnung (22) und koaxial zu dieser Öffnung eine kegelstumpfförmige Verbindungsoberfläche (25) anbringt, die der Verbindungsoberfläche (24) des Rohres (23) entspricht, auf der Außenseite der Wand (20) austritt und in Richtung auf diese Seite der Wand (20) ausgeweitet ist,

daß man die Verbindungsoberflächen des Rohres (23) und der Wand (20) zusammensetzt, und daß man durch Elektronenstrahl in einem einzigen Gang und ohne Stützmetall das Rohr (23) und das Wandelement (20) entlang ihrer Verbindungsoberflächen (24, 25) von der Außenseite des Wandelements aus schweißt.

2. Verfahren gemäß Anspruch 1, **dadurch gekennzeichnet**, daß der Halbwinkel an der Kante der Verbindungsflächen (24, 25) etwa gleich 45° ist.

3. Verfahren zur Befestigung gemäß einem der Ansprüche 1 und 2, **dadurch gekennzeichnet**, daß das Wandelement (20) um die Öffnung (22) an der Stelle des Austritts des aufgeweiteten Teils der Verbindungsfläche (25) eine torusförmige Kehle (28) aufweist.

4. Verfahren zur Befestigung gemäß einem der Ansprüche 1 bis 3, **dadurch gekennzeichnet**, daß das Wandelement (20) und das Rohr (23) aus einem Stahl bestehen, der im wesentlichen 2 bis 2,5% Chrom und 0,90 bis 1,10% Molybdän sowie einen Kohlenstoffgehalt von höchstens 0,15% enthält.

5. Verfahren zur Befestigung gemäß einem der Ansprüche 1 bis 4, für den Fall, daß das Wandelement (20) ein Röhrentragring eines Behälters eines Druckwasserreaktors ist, **dadurch gekennzeichnet**, daß der Röhrentragring einen Durchmesser von ca. 4.50 m und eine geringere Dicke als 350 mm hat.

**Claims**

1. Process for mounting a pipe (23) by welding onto a wall member (20) of a thickness of 100 to 350 mm, comprising at least one passage opening (22) whose diameter is substantially equal to the internal diameter of the pipe (23), the pipe (23) being welded over its entire thickness into the extension of the opening (22) on one of the sides or external side of the wall (20), characterised in that on an end part of the pipe (23) a connecting surface (24) of frustoconical shape is produced, whose axis coincides with the axis of the pipe (23) having an apex halfangle of between 30 to 60° and a section of transverse dimension decreasing towards said end of the pipe (23), in that a connecting surface (25) of frustoconical shape corresponding to the shape of the connecting surface (24) of the pipe (23) opening onto the external side of the wall (20) is produced on only a part of the thickness of the wall member (20), at the level of the opening (22) and coaxially with said opening,

    — that the connecting surfaces of the pipe (23) and of the wall (20) are placed so that they coincide, and

    — that the pipe (23) and the wall member (20) are welded, using an electron beam in a single pass and without filler metal, along their connecting surfaces (24, 25), from the external side of the wall.

2. Process according to Claim 1, characterised in that the apex halfangle of the connecting surfaces (24, 25) is substantially equal to 45°.

3. Mounting process according to either Claim 1 or 2, characterised in that the wall member (20) has a groove of toroidal shape (28) around the opening (22), in the place where the widened part of the connecting surface (25) opens.

4. Mounting process according to any one of Claims 1 to 3, characterised in that the wall member (20) and the pipe (23) are made of a steel containing mainly 2 to 2.50% of chromium and 0.90 to 1.10% of molybdenum and a carbon content not exceeding 0.15%.

5. Mounting process according to any one of Claims 1 to 4, in the case where the wall member (20) is a pipe-carrying shell of a pressurised-water nuclear reactor vessel, characterised in that the pipe-carrying shell has a diameter close to 4.50 m and a thickness less than 350 mm.

FIG.1

FIG. 2

FIG. 3

FIG.4A

FIG.5A

FIG.4B

FIG.5B

FIG.6A

FIG.6B

FIG.7

FIG.8